# FASCICULE DE BREVET EUROPEEN

(11) **EP 2 639 079 B1**
(45) Date de publication et mention de la délivrance du brevet: **22.10.2014**
(21) Numéro de dépôt: 13290051.5
(22) Date de dépôt: 13.03.2013
(51) Int. Cl.: B60B 33/02, B60B 33/00

(54) **Roulette de type "à frein"**
Bremsrolle
Braked castor

(30) Priorité: 16.03.2012 FR 1200800
(43) Date de publication de la demande: 18.09.2013
(73) Titulaire: Tente Roulettes Polymeres - Bruandet, 39700 La Barre (FR)
(72) Inventeur: Dayt, Patrick, 25000 Besançon (FR)
(74) Mandataire: Flavenot, Bernard

(56) Documents cités:
- DE-U1-202011 005 192
- GB-A- 2 132 478
- GB-A- 2 240 471

## Description

La présente invention concerne les roulettes aptes à être montées sur des objets pour faciliter leur déplacement, et plus particulièrement celles qui sont dites "à frein", comme celles qui se trouvent sur des tables de service roulantes ou analogues.

Ces roulettes comportent des moyens de blocage pour éviter que, lorsqu'elles sont montées par exemple sur une table de service et que cette dernière n'est pas sous le contrôle de son utilisateur, elle ne se déplace accidentellement au risque de constituer un danger de toute sorte pour les tiers et l'environnement.

Il existe un grand nombre de réalisations de ce type de roulettes "à frein" ou "à blocage", par exemple celles décrites dans le GB 2 132 478, le GB 2 240 471 et le DE-U-20 2011 005192 qui comporte les caractéristiques du préambule de la revendication 1. En général, ces réalisations n'ont pas une structure assez simple et compacte pour minimiser à la fois le coût de revient global des objets sur lesquels est monté ce type de roulettes et l'encombrement de ces roulettes.

La présente invention a pour but de réaliser une roulette dite "à frein" ou "à blocage" dont la structure permet d'atteindre les buts et résultats visés ci-dessus.

Plus précisément, la présente invention a pour objet une roulette apte à être montée sur un objet pour faciliter le déplacement de cet objet, comme une table de service ou analogue, dont les caractéristiques sont énoncées dans les revendications annexées.

D'autres caractéristiques et avantages de la présente invention apparaîtront au cours de la description suivante donnée en regard des dessins annexés à titre illustratif mais nullement limitatif, dans lesquels :
Les figures 1 et 2 représentent respectivement, sous forme schématique, deux modes de réalisation de la roulette selon l'invention, la réalisation selon la figure 2 constituant un perfectionnement à la réalisation selon la figure 1, et
Les figures 3 à 6 représentent un mode de réalisation industriel de la roulette selon l'invention en accord avec la représentation schématique selon la figure 2.

Il est bien précisé que, dans la présente description, si l'adverbe "sensiblement" est associé à un qualificatif d'un moyen donné, ce qualificatif doit être compris au sens strict ou approché.

En référence à toutes les figures annexées, la présente invention concerne une roulette apte à être montée sur un objet pour faciliter le déplacement de cet objet, comme par exemple une table de service dans des cantines, milieux hospitaliers, etc.

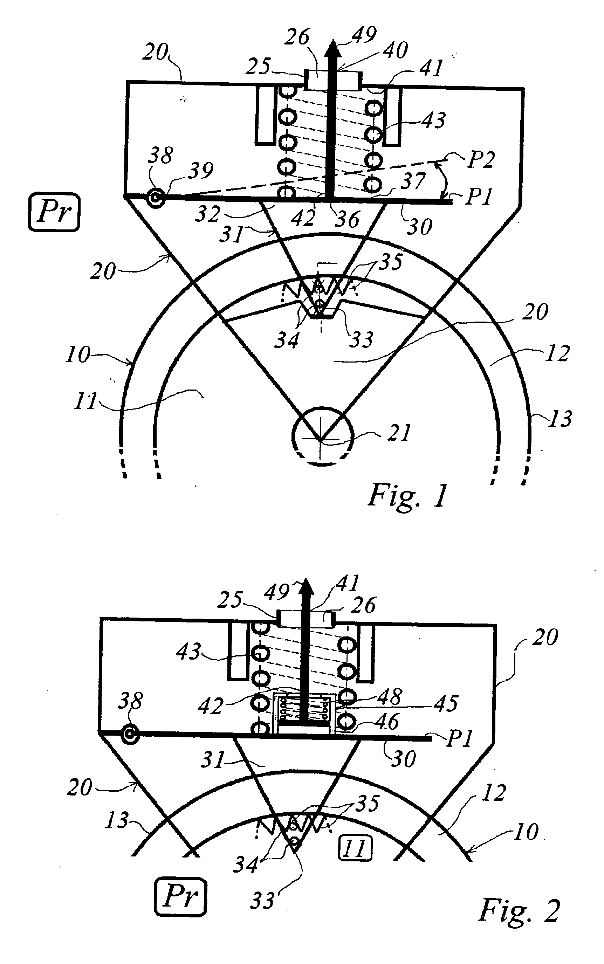

La roulette comprend au moins une roue 10 comportant deux faces latérales reliées par une surface de roulement cylindrique de révolution 13 et un palier de rotation défini selon un premier axe 21, cette roue définissant ainsi un plan de roue Pr perpendiculaire au premier axe. Ce plan de roue Pr est, en référence aux figures 1 et 2, le plan de ces deux figures.

La roulette comporte un carter 20 muni d'un pivot 25 pour sa fixation sur l'objet, en précisant que ce pivot peut être fixe ou pivotant par rapport au carter autour d'un axe perpendiculaire au premier axe 21.

Sont aussi prévus des moyens pour monter la roue 10 en rotation, par son palier de rotation, sur ce carter, un bras 30, des moyens pour monter le bras 30 en déplacement sur le carter 20 de façon que ce bras soit apte à prendre toutes positions entre une première position P1 et seconde position P2, ces première et seconde positions étant comprises, et en étant constamment situé en dehors de l'espace défini par la surface virtuelle enveloppant la surface de roulement 13 de la roue 10.

La roulette comporte aussi une patte 31 montée par une première 32 de ses extrémités en saillie sur le bras 30 de façon qu'elle soit située dans un plan parallèle au plan de roue Pr, et que sa seconde extrémité 33 opposée à la première extrémité 32 soit, elle, constamment située dans cet espace cylindrique, quelle que soit la position du bras 30 entre ses première et seconde positions P1, P2, au moins une gorge 35 réalisée dans la face latérale de la roue 10 qui est en regard de la patte 31, cette gorge 35 étant par exemple définie entre deux flancs, de préférence obliques, de deux dents consécutives.

Il est aussi prévu un ergot 34 situé latéralement en saillie sur la face de la patte qui est en regard de la face latérale de la roue 10 dans laquelle est réalisée la gorge 35, la position de cet ergot 34 sur la patte et ses dimensions étant déterminées de façon que, lorsque le bras 30 est dans l'une P2 de ses deux positions P1, P2, cet ergot 34 plonge dans la gorge 35 pour empêcher la roue de tourner par rapport au carter 20 et que, lorsque le bras est dans son autre position P1, l'ergot soit en dehors de la gorge 35 pour permettre à la roue 10 de tourner librement autour du premier axe 21 par rapport au carter 20.

La roulette comporte aussi des moyens de commande 40 pour faire passer le bras 30 de sa première position P1 à sa seconde position P2 et réciproquement.

Selon une réalisation préférée, ces moyens de commande 40 pour faire passer le bras de sa première position à sa seconde position et réciproquement, comportent un lien 41 dont une première extrémité 42 est montée en coopération avec un premier point 36 du bras 30 et des moyens de rappel élastiques 43, tel un ressort comme illustré, montés entre le carter 20 et un deuxième point 37 du bras 30, ces moyens de rappel élastique 43 étant agencés de façon à tendre à ramener constamment le bras 30 dans l'une P1 de ses deux positions P1, P2.

Il est précisé qu'un tel lien doit s'entendre comme un lien souple ou relativement souple, tel un câble ou analogue, ou semi-rigide comme une corde à piano ou analogue, ou rigide comme une tige ou analogue.

Selon un mode de réalisation préférentiel, les moyens de rappel élastiques 43 sont agencés de façon à tendre à ramener constamment le bras 30 dans sa première position P1 qui est celle dans laquelle l'ergot 34 est en dehors de la gorge 35.

En référence à toutes les figures, le ressort est du type à compression en fil bobiné.

Il est souligné que l'inverse serait une réalisation possible. Dans ce cas, les moyens de rappel élastiques 43 seraient agencés de façon à tendre à ramener constamment le bras 30 dans sa seconde position P2 qui est celle dans laquelle l'ergot 34 est dans la gorge 35.

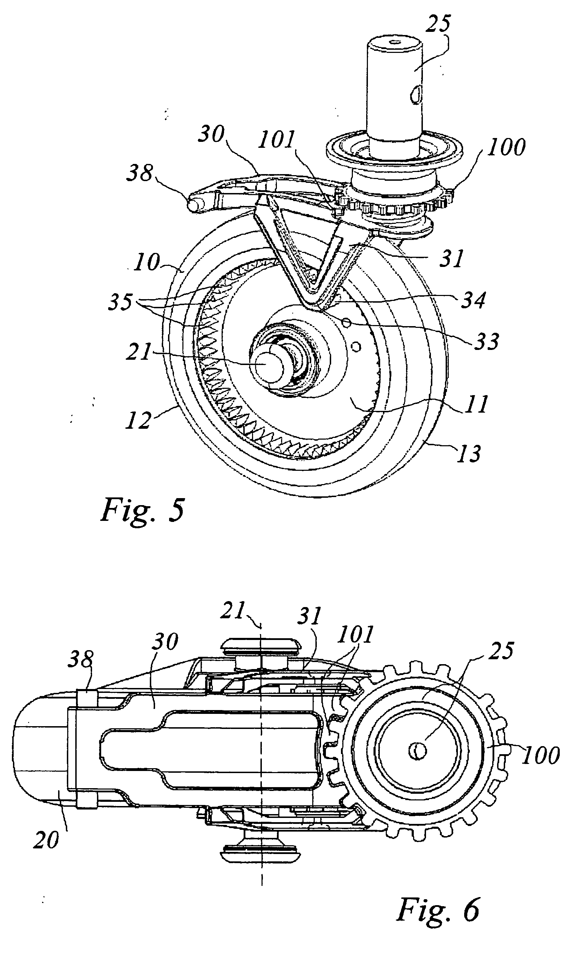

De façon avantageuse, figure 2 et figures 3 à 6, le lien 41 est monté en coopération, par sa première extrémité 42, avec le premier point 36 du bras 30 au moyen d'une liaison élastique 45 agencée de façon que la première extrémité 42 du lien ait tendance à s'éloigner du premier point 36 du bras. Cette structure est préférable pour éviter des problèmes qui peuvent survenir, comme ceux explicités ci-après.

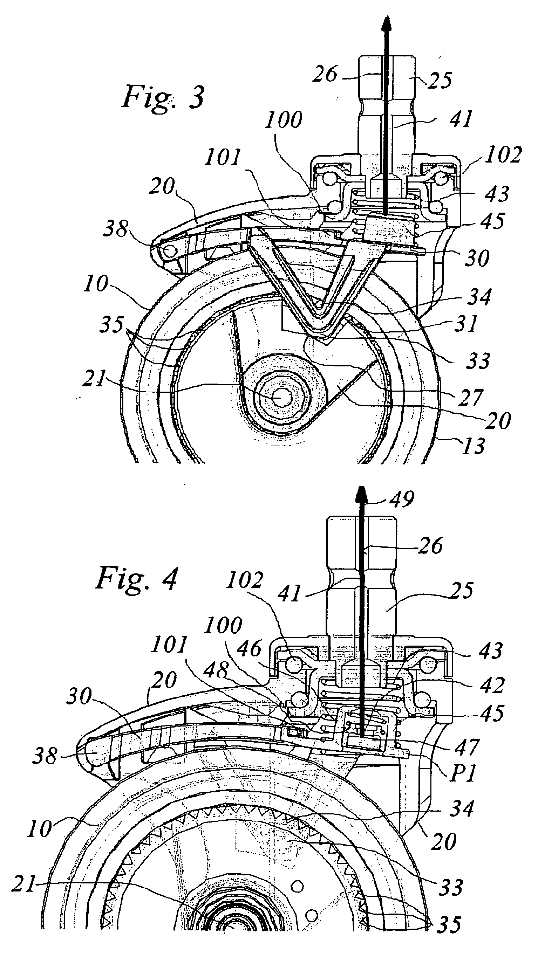

Selon une réalisation possible et préférée, comme plus particulièrement visible sur les figures 2 et 4, cette liaison élastique 45 comporte un cylindre de piston 46 solidaire, par une première extrémité, en déport du bras 30, un piston 47 solidaire de la première extrémité 42 du lien et monté coulissant dans le cylindre de piston 46, et un ressort 48 apte à agir en compression monté entre ce piston 47 et la seconde extrémité du cylindre de piston opposée à la première.

Cependant, cette liaison élastique 45 peut comporter un ressort, non illustré, apte à agir en extension et monté en série dans le lien 41, optionnellement entre la première extrémité 42 du lien et le bras 30. Il est précisé que cette dernière réalisation peut être combinée avec celle décrite au-dessus.

Par ailleurs, selon une réalisation préférée, le pivot 25 comporte une percée traversante 26 et, dans ce cas, le lien 41 passe dans cette percée traversante de façon qu'il en émerge par sa seconde extrémité 49 qui est par exemple connectée à tout moyen adapté à l'objet sur lequel est montée la roulette selon l'invention. A titre d'exemple purement illustratif, lorsque l'objet est une table de service, un tel moyen adapté peut être constitué d'une poignée montée en coopération avec la barre de manipulation de la table de service. Une telle poignée est par exemple du même type que les poignées qui sont utilisées pour la commande des freins positionnées sur le guidon d'une bicyclette.

De façon tout à fait préférentielle, la roulette comporte une butée 27 réalisée sur le carter 20, cette butée étant agencée de façon que la seconde extrémité 33 de la patte 31 vienne à son contact pour définir la première position P1 du bras 30, en évitant que, quand il est dans sa première position P1, le bras ne vienne, sous l'action du ressort 43 qui se détend, au contact de surface de roulement 13 de la roue. Car, selon une réalisation très préférentielle, les première et seconde positions P1, P2 du bras sont définies sensiblement dans le plan de roue Pr, avec en outre, de façon encore plus préférentielle, le fait que le bras reste aussi constamment dans ce plan Pr lorsqu'il se déplace entre ses deux positions.

Selon une réalisation avantageuse, la roue 10 comporte un moyeu 11, une bande de roulement 12, par exemple en un élastomère thermoplastique, ou en polyuréthane, ou en caoutchouc naturel ou synthétique, positionnée sur la tranche du moyeu 11 et une pluralité de gorges 35 définies entre une même pluralité de dents, cette pluralité de gorges étant réalisée sur tout le pourtour extérieur du moyeu 11, les gorges 35 étant très avantageusement ouvertes vers le premier axe de rotation 21, comme illustré sur les figures.

Comme il a été mentionné ci-avant, la roulette comporte des moyens pour monter le bras 30 en déplacement sur le carter 20. Ces moyens peuvent être des moyens agissant en translation. Cependant, comme illustré sur les figures, ils sont avantageusement constitués par des moyens pour lier en rotation un troisième point 39 du bras 30 par rapport au carter autour d'un second axe de rotation 38 parallèle au premier axe 21. Dans ce cas, les premier et deuxième points 36, 37 du bras 30 sont déterminés comme étant non situés sur ce second axe de rotation 38.

Il est également mentionné ci-avant que le carter 20 peut être monté fixe sur le pivot 25, ou pivotant autour d'un axe vertical quand la roulette est en utilisation normale.

Dans ce dernier cas, il est avantageux de prévoir des moyens pour bloquer le pivotement du carter 20 par rapport au pivot 25, et donc ainsi la roulette dans son ensemble par rapport à l'objet apte à être déplacé. De tels moyens sont connus en eux-mêmes. Ils comportent essentiellement, figures 3 à 6, une couronne à crans femelles 100 fixée sur le pivot 25 qui est monté pivotant autour d'un axe vertical au moyen d'un joint à roulement à billes 102 ou analogue, figures 3 et 4, et des crans mâles complémentaires des crans femelles réalisés solidaires du bras 30. La couronne à crans femelles 100 et les crans mâles sur le bras 30 sont agencés les uns par rapport aux autres de façon que, lorsque le bras 30 passe dans sa position P2, les crans mâles viennent se loger dans les crans femelles de la couronne pour empêcher le pivotement du carter par rapport au pivot 25 et que, lorsque le bras passe dans sa position P1, les crans mâles sortent des crans femelles de la couronne pour permettre le libre pivotement du carter 20 par rapport au pivot 25, et donc le libre pivotement de la roulette dans son ensemble.

La roulette décrite ci-dessus fonctionne et s'utilise de la façon suivante dans le cas particulier où l'objet apte à être est une table de service ou analogue comportant au moins trois roulettes, quatre étant en général préférable, deux de ces roulettes comportant des moyens de blocage comme décrits ci-dessus, de façon que la table de service puisse reposer sur le sol de façon stable et s'y déplacer librement par roulement sous l'action uniquement d'une poussée ou d'une traction par un utilisateur.

Les deux roulettes sont du type qui est celui dans lequel les roues 10 peuvent tourner autour de leur axe 21 quand aucune traction n'est appliquée sur les liens 41, et donc quand les ergots 34 sont naturellement de façon stable en dehors des gorges 35.

Un fonctionnement dans le cas inverse, c'est-à-dire dans le cas d'un mode de réalisation de la roulette où l'ergot 34 est naturellement dans la gorge 35, et où il faut agir sur le lien pour déplacer le bras 30 de façon que l'ergot 34 sorte de la gorge 35, s'en déduit sans aucune difficulté.

Pour la description du fonctionnement des roulettes dans les conditions précisées ci-dessus, il ne sera fait référence qu'au fonctionnement d'une seule roulette selon l'invention, les deux roulettes fonctionnant de façon strictement identique.

Si aucune traction n'est exercée sur le lien 41 à l'encontre de l'action du ressort de rappel 43, par exemple au moyen d'une poignée, le bras 30 est dans sa première position P1, l'ergot 34 ne plonge pas dans la gorge 35 et l'extrémité 33 de la patte 31 est en butée contre le carter 20. La roue 10 peut alors librement tourner autour de son axe 21 par rapport au carter 20.

Si, selon l'exemple choisi ci-avant, les deux roulettes de la table de service sont dans un état non bloqué, la table de service peut se déplacer sans aucune gêne sur le sol.

En revanche, si l'utilisateur veut empêcher la table de service de se déplacer, il appuie sur la poignée, ce qui entraîne la compression du ressort de rappel 43 et amène le bras 30 dans sa seconde position P2. Dans ce mouvement, la patte se déplace et amène l'ergot 34 dans une gorge 35 de la pluralité de gorges réalisées sur le pourtour du moyeu 11. La roue est alors bloquée et ne peut plus rouler sur le sol.

Si les deux roues de la table de service sont dans cet état de blocage, la table est toute entière empêchée de se déplacer et reste donc stable sur le sol.

Pour le déblocage, il suffit de relâcher la poignée et, sous l'action du ressort 43, le bras 30 reprend sa première position P1, celle dans laquelle l'ergot est en dehors de la gorge 35 et celle qui permet à la roue de tourner autour de son axe 21.

Dans le cas de la réalisation selon la figure 2 et les figures 3 à 6, la liaison élastique 45 évite qu'il y ait un endommagement de la roulette lorsque, lors du déplacement de la patte 30 via le bras 30, l'ergot 34 tombe en dehors d'une gorge, par exemple sur le sommet d'une dent.

En effet, si l'ergot 34 tombe en dehors de la gorge 35, le lien 41 qui est tiré exerce une force très importante qui, si le bras 30 n'arrive pas à sa seconde position P2, peut être appliquée sur le sommet d'une dent, ce qui pourrait entraîner la détérioration notamment d'une dent, et/ou du lien 41 et/ou du bras 30 et/ou de l'ergot 34 et/ou de la patte 31.

Mais, avec la liaison élastique 45 comme décrite ci-avant, l'extrémité 42 du lien peut s'éloigner du bras en comprimant le ressort 48 sans pour cela continuer à déplacer le bras 30 vers sa seconde position P2. Le bras reste ainsi bloqué dans une position intermédiaire entre P1 et P2.

Pour débloquer la rotation du bras jusqu'à sa position P2, il suffit de faire rouler la roue sur une très petite rotation angulaire pour que l'ergot 34 tombe dans une gorge 35. En fait, cet angle de rotation de la roue correspondant au maximum à l'angle dans lequel chaque gorge est inscrite, il est donc sensiblement égal à 360 degrés divisés par le nombre de gorges de la pluralité. Ce résultat correspond généralement à un déplacement linéaire de la table d'une très faible longueur.

Avec cette manoeuvre, le ressort 43 amène en traction le bras 30 dans sa seconde position P2 et, simultanément, le ressort 48 se décomprime pour que l'extrémité 42 du lien reprenne sa position origine, c'est-à-dire dans le fond du cylindre de piston 46, à proximité du bras 30.

## Revendications

1. Roulette apte à être montée sur un objet destiné à être déplacé, comme une table de service ou analogue, qui comprend au moins:
• une roue (10) comportant deux faces latérales reliées par une surface de roulement cylindrique de révolution (13) et un palier de rotation défini selon un premier axe (21), ladite roue définissant un plan de roue (Pr) perpendiculaire au premier axe,
• un carter (20), ledit carter comportant un pivot (25) pour sa fixation sur l'objet,
• des moyens pour monter ladite roue (10) en rotation, par son palier de rotation, sur ledit carter,
• un bras (30),
• des moyens pour monter ledit bras (30) en déplacement sur ledit carter (20) de façon que ce bras soit apte à prendre toutes positions entre une première position (P1) et seconde position (P2), ces première et seconde positions étant comprises, en étant constamment situé en dehors de l'espace défini par la surface virtuelle enveloppant la surface de roulement (13) de ladite roue (10),
• des moyens de commande (40) pour faire passer le bras (30) de sa première position (P1) à sa seconde position (P2) et réciproquement,
• une patte (31) montée par une première (32) de ses extrémités en saillie sur ledit bras (30) de façon qu'elle soit située dans un plan parallèle au dit plan de roue (Pr), et que sa seconde extrémité (33) opposée à la première extrémité (32) soit constamment située dans ledit espace cylindrique quelle que soit la position du dit bras (30) entre ses première et seconde positions (P1, P2), **caractérisée par le fait qu'**elle comprend
• au moins une gorge (35) réalisée dans la face latérale de la roue (10) en regard de ladite patte (31),
• un ergot (34) situé latéralement en saillie sur la face de ladite patte qui est en regard de la face latérale de la roue (10) dans laquelle est réalisé ladite gorge (35), la position du dit ergot (34) sur ladite patte et ses dimensions étant déterminées de façon que, lorsque ledit bras (30) est dans l'une (P2) de ses deux positions (P1, P2), ledit ergot (34) plonge dans ladite gorge pour empêcher la roue de tourner par rapport au carter (20) et que, lorsque ledit bras est dans son autre position (P1), ledit ergot soit en dehors de ladite gorge pour permettre à ladite roue (10) de tourner librement autour du premier axe (21) par rapport au dit carter (20).

2. Roulette selon la revendication 1, **caractérisée par le fait que** lesdits moyens de commande (40) pour faire passer le bras de sa première position à sa seconde position et réciproquement, comportent un lien (41) dont une première extrémité (42) est montée en coopération avec un premier point (36) du bras (30) et des moyens de rappel élastiques (43) montés entre ledit carter (20) et un deuxième point (37) du dit bras (30), ces moyens de rappel élastiques (43) étant agencés de façon à tendre à ramener constamment ledit bras (30) dans l'une (P1) de ses deux positions (P1, P2):

3. Roulette selon la revendication 2, **caractérisée par le fait que** les moyens de rappel élastiques (43) sont agencés de façon à tendre à ramener constamment ledit bras (30) dans sa première position (P1) qui est celle dans laquelle ledit ergot (34) est en dehors de ladite gorge (35).

4. Roulette selon l'une des revendications 2 et 3, **caractérisée par le fait que** ledit lien (41) est monté en coopération, par sa première extrémité (42), avec le premier point (36) du dit bras (30) au moyen d'une liaison élastique (45) agencée de façon que la première extrémité (42) du dit lien ait tendance à s'éloigner du dit premier point (36) du dit bras.

5. Roulette selon la revendication 4, **caractérisée par le fait que** ladite liaison élastique (45) comporte un cylindre de piston (46) solidaire en déport du dit bras (30) par une première extrémité, un piston (47) solidaire de la première extrémité (42) du lien, ledit piston étant monté coulissant dans ledit cylindre de piston (46), et un ressort (48) apte à agir en compression monté entre ledit piston (46) et la seconde extrémité du cylindre de piston opposée à la première.

6. Roulette selon l'une des revendications 4 et 5, **caractérisée par le fait que** ladite liaison élastique (45) comporte un ressort apte à agir en extension monté en série dans ledit lien (41) optionnellement entre sa première extrémité (42) et ledit bras (30).

7. Roulette selon l'une des revendications 2 à 6, **caractérisée par le fait que** ledit pivot (25) comporte une percée traversante (26), ledit lien (41) passant dans ladite percée traversante de façon qu'il en émerge par sa seconde extrémité (49).

8. Roulette selon l'une des revendications 3 à 7, **caractérisée par le fait qu'**elle comporte une butée (27) réalisée sur ledit carter (20), ladite butée étant agencée de façon que la seconde extrémité (33) de ladite patte (31) vienne à son contact pour définir la première position (P1) du bras (30).

9. Roulette selon l'une des revendications précédentes, **caractérisée par le fait que** ladite roue (10) comporte un moyeu (11), une bande de roulement (12) positionnée sur la tranche du dit moyeu (11) et une pluralité de gorges (35), lesdites gorges de ladite pluralité étant réalisées sur tout le pourtour extérieur du dit moyeu (11), les gorges étant ouvertes vers ledit premier axe de rotation (21).

10. Roulette selon l'une des revendications 2 à 9, **caractérisée par le fait que** moyens pour monter ledit bras (30) en déplacement sur ledit carter (20) sont constitués par des moyens pour lier en rotation un troisième point (39) du dit bras (30) par rapport au dit carter autour d'un second axe de rotation (38), les premier et deuxième points (36, 37) du bras (30) étant non situés sur ce dit second axe de rotation (38).

11. Roulette selon l'une des revendications précédentes, **caractérisée par le fait que** les première et seconde positions (P1, P2) du bras sont situées sensiblement dans ledit plan de roue (Pr).

## Patentansprüche

1. Rolle, die dafür ausgelegt ist, an einem Gegenstand montiert zu werden, der dazu bestimmt ist, verlagert zu werden, etwa ein Serviertisch oder dergleichen, die wenigstens umfasst:
- ein Rad (10), das zwei seitliche Flächen, die durch eine rotationssymmetrische zylindrische Rolloberfläche (13) verbunden sind, und ein Drehlager, das längs einer ersten Achse (21) definiert ist, aufweist, wobei das Rad eine zu der ersten Achse senkrechte Radebene (Pr) definiert,
- ein Gehäuse (20), wobei das Gehäuse einen Drehzapfen (25) für seine Befestigung an dem Gegenstand aufweist,
- Mittel, um das Rad (10) drehbar mittels seines Drehlagers an dem Gehäuse zu montieren,
- einen Arm (30),
- Mittel, um den Arm (30) verlagerbar an dem Gehäuse (20) zu montieren, derart, dass dieser Arm sämtliche Positionen zwischen einer ersten Position (P1) und einer zweiten Position (P2) einschließlich dieser ersten und dieser zweiten Position einnehmen kann, wobei er sich stets außerhalb des Raums befindet, der durch die virtuelle Oberfläche definiert ist, die die Rolloberfläche (13) des Rades (10) umgibt,
- Steuermittel (40), um den Arm (30) aus seiner ersten Position (P1) in seine zweite Position (P2) zu überführen und umgekehrt,
- eine Lasche (31), die durch ein erstes (32) ihrer Enden vorstehend an dem Arm (30) montiert ist, derart, dass sie sich in einer Ebene parallel zu der Radebene (Pr) befindet, und dass sich ihr zweites Ende (33) gegenüber dem ersten Ende (32) unabhängig von der Position des Arms (30) zwischen seiner ersten und seiner zweiten Position (P1, P2) stets in dem zylindrischen Raum befindet, **dadurch gekennzeichnet, dass** sie wenigstens umfasst:
- wenigstens eine Kehle (35), die in der seitlichen Fläche des Rades (10) gegenüber der Lasche (31) ausgebildet ist,
- eine Nase (34), die sich seitlich vorstehend an der Fläche der Lasche befindet, die sich gegenüber der seitlichen Fläche des Rades (10) befindet, in der die Kehle (35) ausgebildet ist, wobei die Position der Nase (34) an der Lasche und die Abmessungen in der Weise bestimmt sind, dass dann, wenn der Arm (30) in einer (P2) seiner zwei Positionen (P1, P2) ist, die Nase (34) in die Kehle versenkt ist, um zu verhindern, dass sich das Rad in Bezug auf das Gehäuse (20) dreht, und derart, dass dann, wenn der Arm in seiner anderen Position (P1) ist, die Nase außerhalb der Kehle ist, um dem Rad (10) zu ermöglichen, sich frei um die erste Achse (21) in Bezug auf das Gehäuse (20) zu drehen.

2. Rolle nach Anspruch 1, **dadurch gekennzeichnet, dass** die Steuermittel (40), um den Arm aus seiner ersten Position in seine zweite Position zu überführen und umgekehrt, ein Verbindungsglied (41), dessen erstes Ende (42) in Zusammenwirkung mit einem ersten Punkt (36) des Arms (30) montiert ist, und elastische Rückstellmittel (43), die zwischen dem Gehäuse (20) und einem zweiten Punkt (37) des Arms (30) montiert sind, aufweisen, wobei diese elastischen Rückstellmittel (43) in der Weise ausgelegt sind, dass sie bestrebt sind, den Arm (30) stets in eine (P1) seiner zwei Positionen (P1, P2) zurückzuführen.

3. Rolle nach Anspruch 2, **dadurch gekennzeichnet, dass** die elastischen Rückstellmittel (43) in der Weise ausgelegt sind, dass sie bestrebt sind, den Arm (30) stets in seine erste Position (P1) zurückzuführen, die jene ist, in der sich die Nase (34) außerhalb der Kehle (35) befindet.

4. Rolle nach einem der Ansprüche 2 und 3, **dadurch gekennzeichnet, dass** das Verbindungsglied (41) durch sein erstes Ende (42) in Zusammenwirkung mit dem ersten Punkt (36) des Arms (30) mittels einer elastischen Verbindung (45), die in der Weise ausgelegt ist, dass das erste Ende (42) des Verbindungsglieds bestrebt ist, sich von dem ersten Punkt (36) des Arms zu entfernen, montiert ist.

5. Rolle nach Anspruch 4, **dadurch gekennzeichnet, dass** die elastische Verbindung (45) einen Kolbenzylinder (46), der durch ein erstes Ende mit dem Arm (30) versetzt fest verbunden ist, einen Kolben (47), der mit dem ersten Ende (42) des Verbindungsglieds fest verbunden ist, wobei der Kolben gleitend in dem Kolbenzylinder (46) montiert ist, und eine Feder (48), die komprimierend wirkt und zwischen dem Kolben (46) und dem zweiten Ende des Kolbenzylinders gegenüber dem ersten Ende montiert ist, umfasst.

6. Rolle nach einem der Ansprüche 4 und 5, **dadurch gekennzeichnet, dass** die elastische Verbindung (45) eine Feder aufweist, die durch Ausdehnung wirken kann und in dem Verbindungsglied (41) zwischen dem ersten Ende (42) und dem Arm (30) in Reihe montiert ist.

7. Rolle nach einem der Ansprüche 2 bis 6, **dadurch gekennzeichnet, dass** der Drehzapfen (25) ein Durchgangsloch (26) aufweist, wobei das Verbindungsglied (41) durch das Durchgangsloch in der Weise verläuft, dass es mit seinem zweiten Ende (49) hiervon vorsteht.

8. Rolle nach einem der Ansprüche 3 bis 7, **dadurch gekennzeichnet, dass** sie einen Anschlag (27) aufweist, der an dem Gehäuse (20) verwirklicht ist, wobei der Anschlag dafür ausgelegt ist, dass das zweite Ende (33) der Lasche (31) mit ihm in Kontakt gelangt, um die erste Position (P1) des Arms (30) zu definieren.

9. Rolle nach einem der vorhergehenden Ansprüche, **dadurch gekennzeichnet, dass** das Rad (10) eine Nabe (11), eine Lauffläche (12), die auf der Schmalseite der Nabe (11) angeordnet ist, und mehrere Kehlen (35) aufweist, wobei die mehreren Kehlen auf dem gesamten äußeren Umfang der Nabe (11) verwirklicht sind, wobei die Kehlen zu der ersten Drehachse (21) geöffnet sind.

10. Rolle nach einem der Ansprüche 2 bis 9, **dadurch gekennzeichnet, dass** Mittel zum verlagerbaren Montieren des Arms (30) an dem Gehäuse (20) durch Mittel gebildet sind, um einen dritten Punkt (39) des Arms (30) drehbar in Bezug auf das Gehäuse um eine zweite Drehachse (38) zu verbinden, wobei sich der erste und der zweite Punkt (36, 37) des Arms (30) nicht auf dieser zweiten Drehachse (38) befinden.

11. Rolle nach einem der vorhergehenden Ansprüche, **dadurch gekennzeichnet, dass** sich die erste und die zweite Position (P1, P2) im Wesentlichen in der Radebene (Pr) befinden.

## Claims

1. A caster suitable for being mounted on an article that is to be moved, such as a serving trolley or the like, which caster comprises at least:
a wheel (10) having two side faces connected together by a cylindrical tread surface of revolution (13) and a rotary bearing defined on a first axis (21), said wheel defining a wheel plane (Pr) perpendicular to the first axis;
• a casing (20), said casing including a swivel (25) for fastening to the article;
• means for mounting said wheel (10) via its rotary bearing to rotate on said casing;
• an arm (30);
• means for mounting said arm (30) to move on said casing (20), in such a manner that the arm is suitable for occupying any position between a first position (P1) and a second position (P2), including these first and second positions, while being constantly situated outside the cylindrical space defined by the geometrical envelope of the tread surface (13) of said wheel (10);
• control means (40) for causing the arm (20) to pass from its first position (P1) to its second position (P2), and vice versa; and
• a tab (31) mounted at a first end (32) of said arm (30) to project therefrom so as to be situated in a plane parallel to said wheel plane (Pr), and so that a second end (33) of said arm (30) opposite from the first end (32) is constantly situated in said cylindrical space whatever the position of said arm (30) between its first and second positions (P1, P2);
the caster being **characterized by** the fact that it comprises:
• at least one groove (35) formed in the side face of the wheel (10) facing said tab (31); and
• a stud (34) situated to project laterally from the face of said tab that faces the side face of the wheel (10) in which said groove (35) is formed, the position of said stud (34) on said tab and its dimensions being determined in such a manner that when said arm (30) is in one (P2) of its two positions (P1, P2), said stud (34) penetrates into said groove in order to prevent the wheel from turning relative to the casing (20), and when said arm is in its other position (P1), said stud is outside said groove so as to allow said wheel (10) to rotate freely about the first axis (21) relative to said casing (20).

2. A caster according to claim 1, **characterized by** the fact that said control means (40) for causing the arm to pass from its first position to its second position and vice versa comprise a link (41) having a first end (42) mounted to co-operate with a first point (36) of the arm (30) and resilient return means (43) mounted between said casing (20) and a second point (37) of said arm (30), these resilient return means (43) being arranged to tend constantly to return said arm (30) into one (P1) of its two positions (P1, P2).

3. A caster according to claim 2, **characterized by** the fact that the resilient return means (43) are arranged so as to tend constantly to return said arm (30) into its first position (P1), which is its position in which said stud (34) is outside said groove (35).

4. A caster according to claim 2 or claim 3, **characterized by** the fact that said link (41) is mounted to co-operate via its first end (42) with the first point (36) of said arm (30) by means of a resilient connection (45) arranged so that the first end (42) of said link tends to move away from said first point (36) of said arm.

5. A caster according to claim 4, **characterized by** the fact that said resilient connection (45) includes a piston cylinder (46) offset securely from said arm (30) via a first end, a piston (47) secured to the first end (42) of the link, said piston being slidably mounted in said piston cylinder (46), and a spring (48) suitable for acting in compression that is mounted between said piston (46) and the second end of the piston cylinder remote from its first end.

6. A caster according to claim 4 and claim 5, **characterized by** the fact that said resilient connection (45) includes a spring suitable for acting in extension that is connected in series with said link (41), optionally between its first end (42) and said arm (30).

7. A caster according to any one of claims 2 to 6, **characterized by** the fact that said swivel (25) includes a through hole (26), said link (41) passing along said through hole so as to emerge therefrom at its second end (49).

8. A caster according to any one of claims 3 to 7, **characterized by** the fact that it includes an abutment (27) made on said casing (20), said abutment being arranged so that the second end (33) of said tab (31) comes into contact therewith in order to define the first position (P1) of the arm (30).

9. A caster according to any preceding claim, **characterized by** the fact that said wheel (10) includes a hub (11), a tread (12) positioned on the edge face of said hub (11), and a plurality of grooves (35), said grooves of said plurality being made over the entire outer periphery of said hub (11), the grooves being open towards said first axis of rotation (21).

10. A caster according to any one of claims 2 to 9, **characterized by** the fact that means for mounting said arm (30) movably on said casing (20) are constituted by means for pivotally connecting a first point (39) of said arm (30) relative to said casing about a pivot, second axis (38), the first and second points (36, 37) of the arm (30) not being situated on said pivot, second axis (38).

11. A caster according to any preceding claim, **characterized by** the fact that the first and second positions (P1, P2) of the arm are situated substantially in said wheel plane (Pr).
